# EUROPÄISCHE PATENTANMELDUNG

(11) **EP 3 199 778 A1**
(43) Veröffentlichungstag der Anmeldung: **02.08.2017**
(21) Anmeldenummer: 17152737.7
(22) Anmeldetag: 24.01.2017
(51) Int. Cl.: F02B 37/18, F02C 6/12

(54) **ABGASTURBOLADER FÜR EINE BRENNKRAFTMASCHINE**

(30) Priorität: 29.01.2016 DE 102016201365; 17.06.2016 DE 102016210901
(71) Anmelder: VOLKSWAGEN AKTIENGESELLSCHAFT, 38440 Wolfsburg (DE)
(72) Erfinder: Kröller, Philipp, 38106 Braunschweig (DE); Schaefer, Carsten, 38518 Gifhorn (DE)

(57) **Zusammenfassung**

Ein Abgasturbolader für eine Brennkraftmaschine, aufweisend ein Gehäuse (1) mit einem außenseitig an dem Gehäuse (1) angeordneten Anschlag (8) und einer in dem Gehäuse (1) angeordneten Bypassöffnung (9) und ein Wastegate mit einem Klappenteller (4), einer Spindel (7), einem Anlenkhebel (6) und einem Koppelstück (3), wobei der Klappenteller (8) zum wahlweisen Öffnen oder Schließen der Bypassöffnung (9) ausgebildet und in dem Gehäuse (1) an der Spindel (7) angeordnet ist, die Spindel (7) aus dem Gehäuse (1) herausgeführt und drehbar um eine Achse in diesem gelagert ist, der Anlenkhebel (6) außerhalb des Gehäuses (1) an der Spindel (7) angeordnet ist, das Koppelstück (3) außerhalb des Gehäuses (1) drehbar um eine Achse an dem Anlenkhebel (6) angeordnet und mit einer Schubstange (2) eines Aktuators verbindbar ist, wobei in einer maximal geöffneten Stellung des Wastegates der Anlenkhebel (6) an dem Anschlag (8) anliegt, soll derart gebaut werden, dass der Verschleiß einer Lagerung des Wastegates in geöffneter Stellung reduziert ist. Dazu ist der Anschlag (8) in im Wesentlichen mittiger Höhe zwischen der Achse des Koppelstücks (3) und der Achse der Spindel (7) angeordnet ist, wenn das Wastegate in maximal geöffneter Stellung ist.

## Beschreibung

Die Erfindung betrifft einen Abgasturbolader für eine Brennkraftmaschine, insbesondere für eine Brennkraftmaschine eines Kraftfahrzeugs.

Abgasturbolader verfügen über ein Wastegate, welches dazu dient, in bestimmten Betriebszuständen, insbesondere bei großen Abgasmassenströmen, einen Teil des Abgases an der Turbine des Abgasturboladers vorbei zu leiten. Durch ein Wastegate kann demnach eine Überdrehzahl des Abgasturboladers verhindert werden. Weiterhin wird durch Öffnen des Wastegates der Abgasweg entdrosselt, wodurch ein ausreichender Massendurchsatz ermöglicht ist.

Die DE 10 2012 202 505 A1 beschreibt ein Wastegate eines Abgasturboladers. Um die Schwingungsanregung einer Wastegate-Klappe durch den Abgasstrom zu reduzieren, wenn nicht gar zu vermeiden, ist vorgesehen, dass die Wastegate-Klappe in geöffneter Stellung durch einen Anschlag abgestützt wird. Neben Anschlägen, welche sich unmittelbar an der Wastegate-Klappe abstützen, wird weiterhin ein Anschlag offenbart, welcher sich gegen den außerhalb des Turboladergehäuses angeordneten Hebel abstützt. Der Anschlag ist dabei im Wesentlichen in Höhe der Wirkrichtung der Kraft der Koppelstange angeordnet.

Durch das Anordnen des Anschlags im Wesentlichen in Wirkrichtung der Kraft der Koppelstange wird die durch die Koppelstange in den Hebel eingeleitete Kraft direkt durch eine zwischen Anschlag und Hebel wirkende Reaktionskraft aufgehoben. Da die Wirklinien der eingeleiteten Kraft und der Reaktionskraft keinen oder nur einen geringen Abstand zueinander aufweisen, wirkt auf den Hebel durch diese beiden Kräfte kein oder nur ein geringes Drehmoment. Dies bewirkt, dass das gehäuseaußenseitige Ende der Spindel bezogen auf die Querrichtung zur Spindelachse kraftfrei oder nahezu kraftfrei ist. Dadurch weist das gehäuseaußenseitige Ende der Spindel keine definierte Anlage in der spielbehafteten Lagerung auf. Die hohen Bauteiltemperaturen und Temperaturschwankungen im Betrieb und die daraus resultierende thermische Ausdehnung erfordern ein relativ großes Spiel zwischen Lagerung und Spindel. Im Betrieb können Motorschwingungen und Abgaspulsationen dazu führen, dass es innerhalb dieses Spiels zu schlagenden Bewegungen der Spindel gegen die Buchse kommt. Diese Anlagewechsel können zu Verschleiß führen.

Aufgabe der vorliegenden Erfindung ist es, den Verschleiß einer Lagerung eines Wastegates in geöffneter Stellung zu reduzieren.

Diese Aufgabe wird erfindungsgemäß durch einen Abgasturbolader für eine Brennkraftmaschine mit den Merkmalen gemäß Anspruch 1 gelöst. Vorteilhafte Weiterbildungen der Erfindung sind in den abhängigen Ansprüchen charakterisiert.

Ein erfindungsgemäßer Abgasturbolader für eine Brennkraftmaschine weist ein Gehäuse mit einem außenseitig an dem Gehäuse angeordneten Anschlag auf. Der Anschlag kann als ein an dem Gehäuse befestigbares, zusätzliches Bauteil ausgeführt sein. In dem Gehäuse ist eine Bypassöffnung angeordnet, durch welche Abgas der Brennkraftmaschine strömen kann. Die Bypassöffnung kann dazu dienen, Abgas an einer Turbine des Abgasturboladers vorbeizuführen, so dass ein Abgasstrom über die Turbine steuer- oder auch regelbar ist.

Der Abgasturbolader weist ein Wastegate mit einem Klappenteller auf. Der Klappenteller ist bezüglich seiner Form an die Bypassöffnung angepasst, so dass der Klappenteller bei Anlage an den Rändern der Bypassöffnung den Abgasstrom durch die Bypassöffnung verhindert oder nahezu verhindert. Dies wird als geschlossene Stellung des Wastegates bezeichnet. Der Klappenteller kann von der Bypassöffnung entfernt werden, wodurch das Wastegate geöffnet wird. Dazu ist der Klappenteller an einer Spindel angeordnet, welche durch das Gehäuse geführt und in diesem drehbar gelagert ist. An der Spindel kann ein Hebel zur Aufnahme des Klappentellers ausgebildet sein, so dass eine Drehung der Spindel im Gehäuse eine Bewegung des Klappentellers auf einer Kreisbahn in Richtung der Bypassöffnung oder von dieser weg verursacht.

Außerhalb des Gehäuses ist an der Spindel ein Anlenkhebel angeordnet, welcher eine Drehung der Spindel erleichtert, indem er einen Hebelarm an der Spindel ausbildet. An dem Anlenkhebel ist ein Koppelstück angeordnet, welches mit einer Schubstange eines Aktuators verbindbar ist. Die Schubstange ist an dem Anlenkhebel in Abstand zu der Achse der Spindel drehbar um eine zu der Achse der Spindel parallele Achse anlenkbar. Die Benennung Koppelstück soll jegliche Entität bezeichnen, welche die Anbindung der Schubstange an den Anlenkhebel und die Drehung der Schubstange um den Anlenkpunkt ermöglicht. Dabei kann das Koppelstück auch als ein Teil der Schubstange oder ein Teil des Anlenkhebels ausgebildet sein.

Eine maximal geöffnete Stellung des Wastegates ist dadurch gekennzeichnet, dass der Klappenteller in dieser Stellung die im ordnungsgemäßen Betrieb des Abgasturboladers größtmögliche Entfernung zu der Bypassöffnung aufweist. In dieser Stellung liegt der Anlenkhebel an dem Anschlag an, so dass der Anschlag eine weitere Öffnung des Wastegates verhindert. Erfindungsgemäß ist der Anschlag so angeordnet, dass er bei maximal geöffneter Stellung des Wastegates in im Wesentlichen mittiger Höhe zwischen der Achse des Koppelstücks und der Achse der Spindel positioniert ist. Zur Bestimmung der Höhe des Anschlags ist der Anschlag senkrecht auf die Ebene zu projizieren, in welcher die Drehachse des Koppelstücks und die Achse der Spindel liegen. Hieraus wird auch klar, dass nicht gemeint ist, dass der Anschlag in einer die Achse des Koppelstücks und die Achse der Spindel einschließenden Ebene angeordnet ist, da in dieser Ebene üblicherweise der Anlenkhebel angeordnet ist. Es soll aber auch nicht ausgeschlossen werden, dass bei entsprechender Gestaltung, beispielsweise einer Krümmung des Anlenkhebels, der Anschlag in dieser Ebene angeordnet sein kann.

Durch den erfindungsgemäßen Abgasturbolader wird vorteilhaft erzielt, dass eine durch die Öffnung des Wastegates bedingte Schubstangen-Rückstellkraft, welche über das Koppelstück auf den Anlenkhebel wirkt, eine auf die Spindel wirkende Reaktionskraft verursacht. Diese auf das gehäuseaußenseitige Ende der Spindel wirkende Reaktionskraft entsteht aufgrund eines durch die Schubstangen-Rückstellkraft und den Anschlag erzeugten Drehmoments, welches auf den Anlenkhebel wirkt. Zusammen mit einer Gaskraft, welche durch den auf den Klappenteller wirkenden Abgasstrom auf das gehäuseinnenseitige Ende der Spindel wirkt, wird erfindungsgemäß eine definierte Anlage der Spindel in deren Lagerung erzielt. Diese Anlage wird vorteilhaft auch nicht durch Motorschwingungen und Abgaspulsationen aufgehoben, solange diese in der für einen ordnungsgemäßen Betrieb der Brennkraftmaschine üblichen Größenordnung bleiben.
Eine besonders große Reaktionskraft und somit eine besonders sichere Definition der Anlage der Spindel in der Lagerung kann dadurch erzielt werden, dass der Anschlag bezüglich seiner Höhe in den mittleren zwei Vierteln des Abstandes zwischen der Achse des Koppelstücks und der Achse der Spindel angeordnet ist. Bevorzugt ist der Anschlag bezüglich seiner Höhe in dem mittleren Drittel des Abstandes zwischen der Achse des Koppelstücks und der Achse der Spindel angeordnet, weiter bevorzugt in dem mittleren Fünftel angeordnet. Diese genauer eingeschränkte Anordnung des Anschlags kann beispielsweise durch die Höhe der Abgaspulsationen oder Motorschwingungen oder die Länge des Anlenkhebels erfoderlich sein.

Der Anschlag kann einstückig mit dem Gehäuse des Abgasturboladers ausgebildet sein, wodurch Kosten für ein zusätzliches Bauteil und dessen Befestigung eingespart werden können sowie die Toleranzkette für die Lage des Anschlags verbessert werden kann. Beispielsweise kann das Gehäuse des Abgasturboladers ein Gussbauteil sein, an welchem der Anschlag durch die Gussform bereits angeformt ist.

Die Spindel kann direkt in dem Gehäuse gelagert sein. Zur Ermöglichung einer freieren Werkstoffwahl für die Materialpaarung der Lagerung kann aber auch eine Buchse in dem Gehäuse angeordnet sein, in welcher die Spindel gelagert ist. Durch eine Buchse kann die Verschleißcharakteristik der Spindellagerung verbessert werden, was zusammen mit der erfindungsgemäßen definierten Anlage der Spindel in der Lagerung eine synergetische Wirkung haben kann. Durch die definierte Anlage der Spindel in der geöffneten Stellung des Wastegates ergibt sich eine bessere und zuverlässigere Kenntnis der Belastung der Lagerung. Diese Kenntnis kann es ermöglichen, eine gezieltere Auswahl der Eigenschaften einer Buchse zu treffen.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: Eine perspektivische Darstellung einer Ausführungsform eines erfindungsgemäßen Abgasturboladers
- Figur 2: Eine Seitenansicht der Ausführungsform der Figur 1
- Figur 3: Eine Draufsicht der Ausführungsform der Figur 1, wobei Gehäuse, Buchse, Anlenkhebel und ein Teil der Spindel geschnitten dargestellt sind

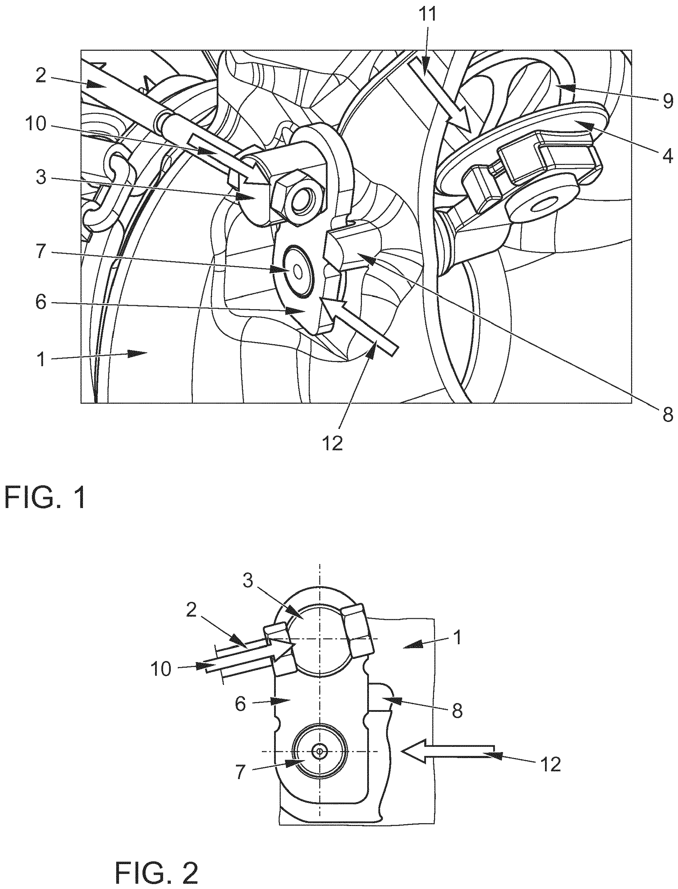

Figur 1 zeigt ein Wastegate, welches typischerweise an einem Gehäuse 1 des Abgasturboladers angeordnet ist. Im Inneren des Gehäuses 1 ist eine Bypassöffnung 9 angeordnet, durch welche Abgas an der Turbine des Abgasturboladers vorbeileitbar ist. Die Bypassöffnung 9 ist mittels eines Klappentellers 4 verschließbar und öffenbar. In Fig. 1 ist die Bypassöffnung 9 geöffnet dargestellt. Der Klappenteller 4 ist an einer Spindel 7 befestigt, welche einen hebelartigen Bereich zur Aufnahme des Klappentellers 4 und einen wellenartigen Bereich zur Lagerung der Spindel 7 in dem Gehäuse 1 aufweist. An dem gehäuseaußenseitigen Ende der Spindel 7 ist ein Anlenkhebel 6 angeordnet. Mit dem Anlenkhebel 6 ist weiterhin über ein Koppelstück 3 eine Schubstange 2 verbunden. Das Koppelstück 3 ist drehbar um eine zu der Achse der Spindel 7 parallele Achse an dem Anlenkhebel 6 befestigt. Das Koppelstück 3 weist eine Durchgangsbohrung auf, durch welche die Schubstange 2 hindurchgeführt ist. Die Schubstange 2 ist mittels Gewindemuttern in dem Koppelstück 3 festgelegt. Mittels der Schubstange 2 wird die Bewegung eines nicht näher beschriebenen Aktuators auf den Anlenkhebel 6 und über die Spindel 7 auf den Klappenteller 4 übertragen.

In der maximal geöffneten Position des Wastegates, wie in Fig. 1 dargestellt, gibt der Klappenteller 4 die Bypassöffnung 9 maximal frei. In dieser Stellung wirkt eine Gaskraft FG 11 des strömenden Abgases auf den Klappenteller 4 in der mittels des Pfeils dargestellten Wirkrichtung. Eine Schubstangen-Rückstellkraft FF 10 wirkt in der dargestellten Richtung entlang der Achse der Schubstange 2 auf den Anlenkhebel 6. Der Anlenkhebel 6 kommt in der geöffneten Stellung des Wastegates an dem Anschlag 8 zur Anlage. Der Anschlag 8 liegt im Wesentlichen in mittiger Höhe zwischen der Achse des Koppelstücks 3 und der Spindel 7 an dem Anlenkhebel 6 an. Hierdurch wird bewirkt, dass eine Reaktionskraft FR 12 auf das gehäuseaußenseitige Ende der Spindel 7 wirkt.

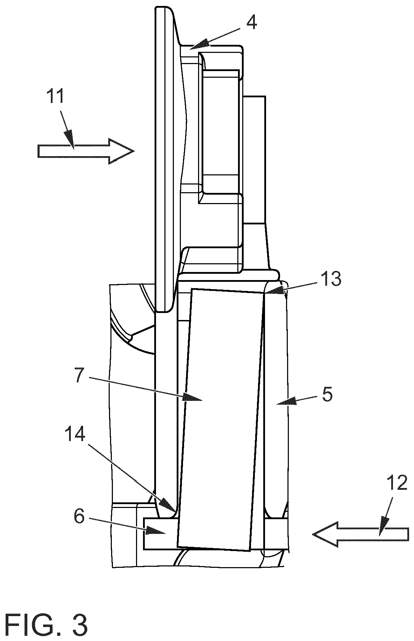

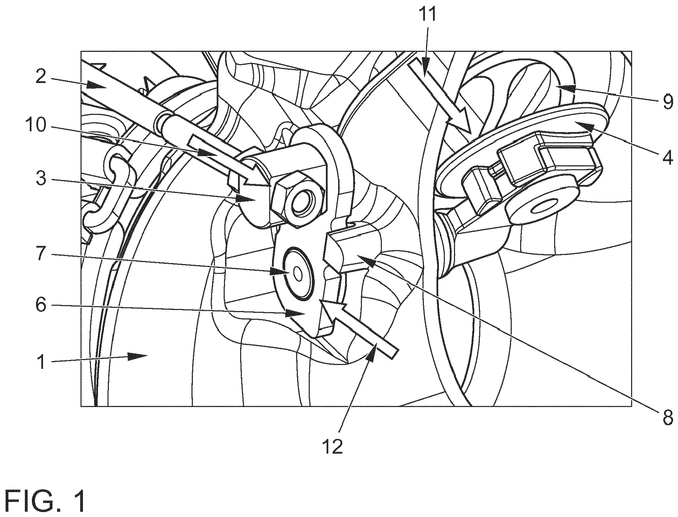

Fig. 3 zeigt, wie durch die Reaktionskraft FR 12 eine definierte Anlage der Spindel 7 in einer Buchse 5 erreicht wird. Die Buchse 5 ist in dem Gehäuse 1 angeordnet und umschließt die Spindel 7 zur Ausbildung einer Gleitlagerung. Im Inneren des Gehäuses wirkt die Gaskraft FG 11 auf den Klappenteller 4. Außerhalb des Gehäuses wirkt die Reaktionskraft FR 12 auf das gehäuseaußenseitige Ende der Spindel 7. Durch die im Wesentlichen gegensinnig gerichteten Kräfte wird die Spindel 7 in der Buchse 5 sowohl in eine definierte gehäuseinnenseitige Anlage 13 als auch in eine definierte gehäuseaußenseitige Anlage 14 gebracht. Kleinere Kräfte, beispielsweise durch Motorschwingungen oder Abgaspulsationen, können erfindungsgemäß nicht mehr einen Wechsel der Anlage bewirken.

Fig. 2 verdeutlicht die Lage des Anschlags 8 auf im Wesentlichen mittiger Höhe zwischen der Achse des Koppelstücks 3 und der Achse der Spindel 7. Zur Erzielung einer ausreichend großen Reaktionskraft FR 12 ist vorgesehen, dass der Anschlag 8 bezüglich seiner Höhe in dem mittleren Drittel des Abstandes zwischen der Achse des Koppelstücks 3 und der Achse der Spindel 7 angeordnet ist.

Zur Bestimmung der Höhe des Anschlags 8 ist der Anschlag 8 senkrecht auf die Ebene zu projizieren, in welcher die Drehachse des Koppelstücks 3 und die Achse der Spindel 7 liegen.

### Bezugszeichenliste

- 1:: Gehäuse
- 2:: Schubstange
- 3:: Koppelstück
- 4:: Klappenteller
- 5:: Buchse
- 6:: Anlenkhebel
- 7:: Spindel
- 8:: Anschlag
- 9:: Bypassöffnung
- 10:: Schubstangen-Rückstellkraft FF
- 11:: Gaskraft FG
- 12:: Reaktionskraft FR
- 13:: Gehäuseinnenseitige Anlage
- 14:: Gehäuseaußenseitige Anlage

## Patentansprüche

1. Abgasturbolader für eine Brennkraftmaschine, aufweisend ein Gehäuse (1) mit einem außenseitig an dem Gehäuse (1) angeordneten Anschlag (8) und einer in dem Gehäuse (1) angeordneten Bypassöffnung (9) und ein Wastegate mit einem Klappenteller (4), einer Spindel (7), einem Anlenkhebel (6) und einem Koppelstück (3), wobei der Klappenteller (8) zum wahlweisen Öffnen oder Schließen der Bypassöffnung (9) ausgebildet und in dem Gehäuse (1) an der Spindel (7) angeordnet ist, die Spindel (7) aus dem Gehäuse (1) herausgeführt und drehbar um eine Achse in diesem gelagert ist, der Anlenkhebel (6) außerhalb des Gehäuses (1) an der Spindel (7) angeordnet ist, das Koppelstück (3) außerhalb des Gehäuses (1) drehbar um eine Achse an dem Anlenkhebel (6) angeordnet und mit einer Schubstange (2) eines Aktuators verbindbar ist, wobei in einer maximal geöffneten Stellung des Wastegates der Anlenkhebel (6) an dem Anschlag (8) anliegt, **dadurch gekennzeichnet, dass** der Anschlag (8) in im Wesentlichen mittiger Höhe zwischen der Achse des Koppelstücks (3) und der Achse der Spindel (7) angeordnet ist, wenn das Wastegate in maximal geöffneter Stellung ist.

2. Abgasturbolader für eine Brennkraftmaschine nach Anspruch 1, **dadurch gekennzeichnet, dass** der Anschlag (8) bezüglich seiner Höhe in den mittleren zwei Vierteln des Abstandes zwischen der Achse des Koppelstücks (3) und der Achse der Spindel (7) angeordnet ist.

3. Abgasturbolader für eine Brennkraftmaschine nach Anspruch 1 oder 2, **dadurch gekennzeichnet, dass** der Anschlag (8) bezüglich seiner Höhe in dem mittleren Drittel des Abstandes zwischen der Achse des Koppelstücks (3) und der Achse der Spindel (7) angeordnet ist.

4. Abgasturbolader für eine Brennkraftmaschine nach einem der vorhergehenden Ansprüche, **dadurch gekennzeichnet, dass** der Anschlag (8) bezüglich seiner Höhe in dem mittleren Fünftel des Abstandes zwischen der Achse des Koppelstücks (3) und der Achse der Spindel (7) angeordnet ist.

5. Abgasturbolader für eine Brennkraftmaschine nach einem der vorhergehenden Ansprüche, **dadurch gekennzeichnet, dass** der Anschlag (8) einstückig mit dem Gehäuse (1) ausgebildet ist.

6. Abgasturbolader für eine Brennkraftmaschine nach einem der vorhergehenden Ansprüche, **dadurch gekennzeichnet, dass** das Gehäuse (1) eine Buchse (5) umfasst, in welcher die Spindel (7) gelagert ist.

7. Brennkraftmaschine mit einem Abgasturbolader gemäß einem der vorhergehenden Ansprüche.
